# EUROPÄISCHE PATENTSCHRIFT

(11) **EP 3 664 304 B1**
(45) Veröffentlichungstag und Bekanntmachung des Hinweises auf die Patenterteilung: **04.10.2023**
(21) Anmeldenummer: 19214043.2
(22) Anmeldetag: 06.12.2019
(51) Int. Cl.: H04B 3/54, H04L 12/46, H04L 12/28

(54) **EIN- UND AUSKOPPELUNG VON DATEN UND DATENTRANSPORT ÜBER ELEKTRISCHE VERSORGUNGSLEITUNG VON BELEUCHTUNGSSYSTEMEN**
INPUT AND OUTPUT OF DATA AND DATA TRANSPORT VIA ELECTRICAL POWER LINE OF LIGHTING SYSTEMS
ENTRÉE ET SORTIE DE DONNÉES ET TRANSPORT DE DONNÉES PAR L'INTERMÉDIAIRE D'UNE CONDUITE D'ALIMENTATION ÉLECTRIQUE DES SYSTÈMES D'ÉCLAIRAGE

(30) Priorität: 06.12.2018 DE 102018009603; 15.02.2019 DE 102019103889
(43) Veröffentlichungstag der Anmeldung: 10.06.2020
(73) Patentinhaber: Siteco GmbH, 83301 Traunreut (DE)
(72) Erfinder: Cantignon, Jörg, 97440 Schleerieth (DE); König, Christian, 84558 Kirchweihdach (DE)
(74) Vertreter: Schmidt, Steffen

(56) Entgegenhaltungen:
- EP-A1- 3 308 227
- EP-B1- 3 308 227
- US-A1- 2016 212 576

## Beschreibung

Die vorliegende Erfindung betrifft eine Netzwerkkomponente für ein Netz, welches eine Vielzahl von gleichartigen Netzwerkkomponenten umfasst, die Teil der Gebäudeinstallation sind, insbesondere Teil einer Beleuchtungseinrichtung des Gebäudes, einschließlich des gebäudenahen Bereiches sowie des Außenbereiches, sowie gegebenenfalls weitere Teilen der Gebäudeinstallation, wie zum Beispiel einen Rollladenantrieb, Thermostat-Regler oder dergleichen.

In modernen Bürogebäuden, aber auch in Wohngebäuden, werden netzwerkfähige Komponenten der Gebäudetechnik, einschließlich der Beleuchtungstechnik, verbaut und miteinander vernetzt, um eine zentrale Steuerung der Komponenten zu ermöglichen. Die einzelnen Komponenten der Gebäudeinstallation benötigen hierzu neben der Spannungsversorgung eine zusätzliche Verbindung mit einem Bussystem, um die benötigte Kommunikation untereinander und die Ansteuerung für die Gebäudeautomation zu gewährleisten. Bussysteme sind zum Beispiel KNX, DALI, ZigBee oder Bluetooth.

Ein Nachteil besteht aber darin, dass Bussysteme einen erhöhten Aufwand bei der Planung, Realisierung und Inbetriebnahme aufweisen. Zudem sind diese Bussysteme hinsichtlich der nachträglichen Erweiterung des bestehenden Systems eingeschränkt, da bei kabelgebundenen Bussystemen in der Regel zusätzliche Busleitungen verlegt werden müssen, kabellose Busverbindungen hingegen in ihrer Reichweite und Störfestigkeit eingeschränkt sind. Darüber hinaus sind die Busleitungen der gängigen Bussysteme nicht dazu geeignet, Netzwerkgeräte mit einem hohen Bandbreitenbedarf, zum Beispiel PCs, Server, Fertigungsmaschinen oder dergleichen, zu verbinden. Daher muss für diese Netzwerkgeräte ein zusätzliches lokales Netzwerk, meistens eine Kombination aus gängigen Standards wie zum Beispiel Ethernet oder WLAN, eingerichtet werden.

US 2016/212576 A1 offenbart eine Netzwerkkomponente gemäß dem Oberbegriff des Anspruchs 1. Weitere Netzwerkeinrichtungen für die Steuerung von Gebäudeinstallationen sind in WO 2016/201353 A1 und US 2009/312046 A1 offenbart.

Aufgabe der vorliegenden Erfindung ist es, einer Gebäudeinstallation eine Netzwerkkomponente bereitzustellen, welche im Hinblick auf Planungsaufwand, Realisierungsaufwand, Erweiterbarkeit, Störanfälligkeit und Kostenintensität bekannten Systemen überlegen ist.

Gelöst wird die Aufgabe durch eine Netzwerkkomponenten nach Anspruch 1 und ein Netzwerk nach Anspruch 12.

Eine Besonderheit der vorliegenden Netzwerkkomponente besteht darin, dass die Netzwerkkomponente über die Spannungsversorgung zugleich ein Datensignal empfängt, welches als Powerline-Signal hochfrequent auf die Versorgungsspannung moduliert wurde. Dieses Datensignal wird einerseits von der Netzwerkkomponente zur Ansteuerung des mindestens einen Betriebsgeräts der Gebäudeinstallation genutzt und andererseits an eine Kommunikationsschnittstelle der Netzwerkkomponente ausgegeben. Um das Datensignal zu erhalten, wird dieses vom Powerline-Modul der Netzwerkkomponente verarbeitet, also aus der Netzfrequenz der Spannungsversorgung aus- bzw. eingekoppelt. Erfindungsgemäß ist dieses Datensignal unter anderem dazu eingerichtet, um von dem Steuergerät der Netzwerkkomponente verarbeitet zu werden, um das mindestens eine Betriebsgerät anzusteuern. Ferner stellt das Datensignal über die Kommunikationsschnittstelle einen Anschluss für ein physikalisches Übertragungsmedium bereit, um ein Netzzugang für weitere Netzwerkkomponenten anzubieten. Eine Besonderheit der erfindungsgemäßen Netzwerkkomponente besteht darin, dass die Netzwerkkomponente über die elektrische Versorgungsleitung auch ein Datensignal erhält, welches von dem Powerline-Modul extrahiert wird, dieses Datensignal zur Ansteuerung des mindestens einen Betriebsgeräts der Gebäudeinstallation genutzt werden kann und zugleich ein Netzwerkzugang für weitere Netzwerkkomponenten bereitgestellt wird.

Gemäß einer bevorzugten Ausführungsform ist das Steuergerät dazu eingerichtet, das mindestens eine Betriebsgerät unter Nutzung des Datensignals anzusteuern. Dies ermöglicht das individuelle Ansteuern, um beispielsweise eine Automation des Betriebsgeräts zu erreichen.

Erfindungsgemäß enthält die Netzwerkkomponente ferner wenigstens einen Sensor, der Umgebungs- oder Umweltzustände erfassen kann.

Erfindungsgemäß ist der Sensor in der Netzwerkkomponente integriert und zwischen dem Powerline-Modul und der Kommunikationsschnittstelle angeschlossen.

Gemäß einer bevorzugten Ausführungsform erfasst der Sensor Werte und speist diese Sensorwerte in das Datensignal ein, wodurch die weitere Datennutzung innerhalb der Leuchte ermöglicht wird.

Gemäß einer bevorzugten Ausführungsform kann das Steuergerät der Netzwerkkomponente den Sensor durch das Nutzen des Datensignals ansteuern und somit die Automation der Netzwerkkomponenten verbessert werden.

Gemäß einer bevorzugten Ausführungsform kann das Steuergerät Parameter von Betriebsgeräten der Netzwerkkomponente auswerten und in das Datensignal einspeisen. Dies ermöglicht das Ansteuern der Netzwerkkomponente von außen, in denen das Datensignal angepasst wird.

Erfindungsgemäß kann das Steuergerät Sensorwerte des Sensors empfangen, verarbeiten, und zur Ansteuerung des Betriebsgeräts verwenden, aber gegebenenfalls auch in das Datensignal einspeisen.

Gemäß einer bevorzugten Ausführungsform umfasst das Powerline-Modul eine interne Recheneinheit, ein Powerline-Interface, ein Hardware-Verbindungselement und eine Ein-/Ausgabe-Schnittstelle, wobei die Art der Hardware des Hardware-Verbindungselement, welche das Powerline-Modul mit der Kommunikationsschnittstelle verbindet, höchstens der vierten Schicht des OSI Modells zugeordnet ist. Dadurch kann das Hardware-Verbindungselement der Netzwerkkomponente an die individuellen Anforderungen der externen Geräte angepasst werden. Beispielsweise kann je nach Anzahl der externen Geräte lediglich ein Hub oder aber ein Switch in der Netzwerkkomponente verbaut sein.

Gemäß einer bevorzugten Ausführungsform nutzt das physikalische Übertragungsmedium die Netzzugangsschicht zur Datenübertragung, und verwendet hierbei Protokolle nach IEEE Norm 802.X, wobei das Übertragungsmedium insbesondere als eine Ethernet-Verbindung nach IEEE Norm 802.3 oder als eine drahtlose Netzwerkverbindung nach IEEE Norm 802.11 ausgestaltet ist, um eine große Kompatibilität für eine Vielzahl von externen Geräten zu erreichen.

Gemäß einer bevorzugten Ausführungsform stellt das physikalische Übertragungsmedium eine Schnittstelle nach EIA-485 bereit, wodurch insbesondere die Kompatibilität beim Einsatz in Industrieanlagen gewährleistet wird.

Gemäß einer bevorzugten Ausführungsform nutzt das physikalische Übertragungsmedium zur Datenübertragung Lichtwellenleiter, um hohe Datenraten zu gewährleisten und um große elektromagnetische Verträglichkeit zu erreichen.

Gemäß einer bevorzugten Ausführungsform nutzt das physikalische Übertragungsmedium zur Datenübertragung eine optische Drahtlosübertragung, um über längere Strecken mit hoher Zuverlässigkeit und Datenrate kommunizieren zu können.

Gemäß einer bevorzugten Ausführungsform ist die Ethernet Verbindung voll-duplex fähig, um insbesondere in Netzwerken mit hohen Anforderungen an die Datenrate Verwendung zu finden.

Ferner sieht die Erfindung ein Netzwerk vor mit wenigstens einer der vorhergehend beschriebenen Netzwerkkomponente und mindestens einer weiteren Netzwerkkomponente, welche über die Kommunikationsschnittstelle mit der Netzwerkkomponente verbunden ist und das Datensignal über das physikalische Übertragungsmedium empfängt, wodurch die Verkabelung der Netzwerkkomponente stark vereinfacht wird und zudem der weiteren Netzwerkkomponente eine Datenverbindung zur Verfügung gestellt wird.

Gemäß einer bevorzugten Ausführungsform kann die weitere Netzwerkkomponente des Netzwerks das Datensignal aufzeichnen und zugleich oder alternativ zum Betreiben eines weiteren Betriebsgeräts der Gebäudeinstallation nutzen. Dies ermöglicht, dass die Netzwerkkomponente im Verbund von Netzwerken mit komplexen Anforderungen betrieben werden kann, da die Kommunikation unter den Teilnehmern gewährleistet wird, aber beispielsweise auch die Betriebssicherheit erhöht wird. Das Netzwerk kann beispielsweise ein Netzwerk einer Gebäudeinstallation sein, wie es in einer der deutschen Patentanmeldungen "Upgradbares Stufenkonzept für Beleuchtungssysteme", "Projektfile für Beleuchtungsanlagen" und "Analysetool zur Auswertung von Bedarfs- und Aufzeichnungsdaten von Beleuchtungsanlagen" der gleichen Anmelderin mit dem selben Anmeldetag wie die vorliegende Anmeldung beschrieben ist.

Weitere Vorteile und Merkmale der vorliegenden Erfindung werden auf den nachfolgenden Beschreibungen einer bevorzugten Ausführungsform deutlich, welche in Verbindung mit dem beigefügten Figuren gegeben wird. In den Figuren ist folgendes dargestellt:
- Figur 1: zeigt schematisch den Aufbau einer Netzwerkkomponente gemäß einer Ausführungsform der vorliegenden Erfindung.
- Figur 2: zeigt schematisch den Aufbau und die Datenleitungen des Power Line Moduls in Figur 1.
- Figur 3: zeigt schematisch den Aufbau einer Netzwerkkomponente nach einer weiteren Ausführungsform der Erfindung.
- Figur 4: zeigt schematisch den Aufbau der Netzwerkkomponente, welche um einen Sensor erweitert wurde, gemäß einer weiteren Ausführungsform der Erfindung.

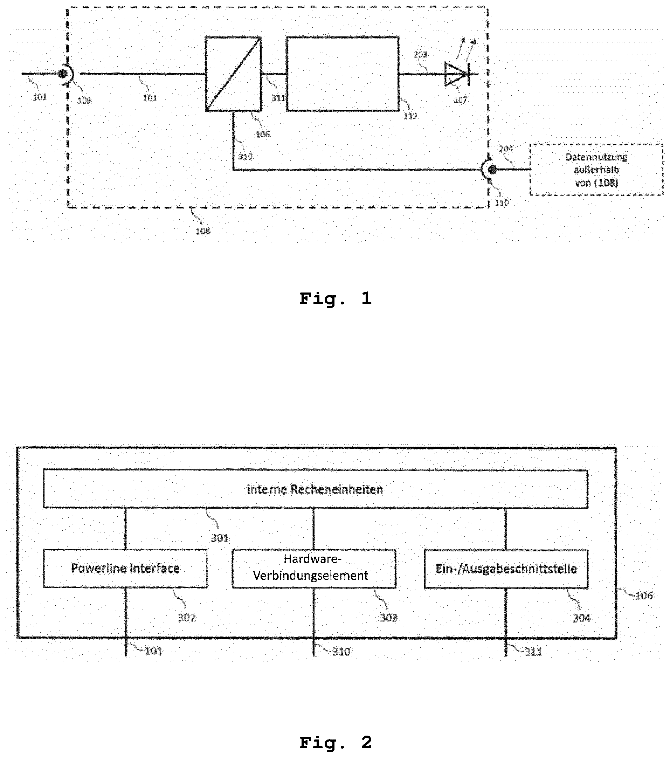

Die Erfindung sieht eine Netzwerkkomponente mit Netzwerkanschluss vor, die Teil einer Gebäudeinstallation, insbesondere für eine Beleuchtungseinrichtung und sonstige Betriebsgerät der Gebäudetechnik, ist. Als Gebäude wird in dieser Anmeldung jede Form von Bauwerken bezeichnet, einschließlich Wohn- und Bürohäuser, Produktionshallen, sowie Straßen und Wege. Die Netzwerkkomponente umfasst eine Versorgungschnittstelle 109, ein Powerline-Modul 106, ein Steuergerät 112, mindestens ein Betriebsgerät 107 der Gebäudeinstallation, und eine Kommunikationsschnittstelle 110, wie in Figur 1 dargestellt ist. Über die Versorgungsschnittstelle 109 der Netzwerkkomponente ist diese mit einer elektrischen Versorgungsleitung 101 verbunden, die der Netzwerkkomponente 108 als Spannungsversorgung dient und zusätzlich ein Datensignal (Powerline-Signal) zur Datenübertragung trägt. Die Spannungsversorgung ist beispielsweise eine gängige Einphasen- oder Dreiphasenwechselspannungsquelle des Niederspannungsnetzes beispielsweise das europäische Versorgungsnetz mit 230 V bzw. 400 V bei jeweils 50 Hz. Powerline, auch PowerLAN genannt, beschreibt eine Technik, die die vorhandenen Leitungen des Niederspannungsnetzes zum Aufbau eines lokalen Netzwerks zur Datenübertragung nutzt, in dem das Datensignal hochfrequent auf das Spannungssignal aufmoduliert wird. Dieses Datensignal wird von dem Powerline-Modul 106 aus dem Wechselspannungssignal des Versorgungsnetzes aus- bzw. eingekoppelt, wobei Einkoppeln das Überlagern des Datensignals auf das Spannungsversorgungssignal meint und Auskoppeln das Trennen des Datensignals von dem Spannungsversorgungssignal meint. Der Koppelprozess kann unidirektional, nur Einkoppeln oder nur Auskoppeln, oder bidirektional, Einkoppeln und Auskoppeln, erfolgen. Wie in Figur 1 dargestellt, wird das Datensignal aufgeteilt und an das Steuergerät 112, welches über eine Leitung 203 das Betriebsgerät 107 ansteuert, und die Kommunikationsschnittstelle 110 übermittelt. Die Kommunikationsschnittstelle 110 stellt einen Anschluss für mindestens ein physikalisches Übertragungsmedium 204 bereit, beispielsweise eine Ethernet-Buchse, elektrische Klemme, optischen Anschluss oder eine Antenne. Über die Kommunikationsschnittstelle 110 kann das Datensignal an externe Netzwerkgeräte, beispielsweise PCs, Kameras, Server oder Steuerungen, zum Beispiel von Verkehrseinrichtungen, weitergeleitet werden. Das Betriebsgerät 107 ist in Figur 1 als LED dargestellt, ist jedoch nicht allein auf diese Ausführungsform beschränkt. Alternative Varianten eines Betriebsgeräts sind andere Leuchtmittel, oder Aktoren, wie zum Beispiel Rollladenmotoren, oder Sensoren oder Signalgeber.

Der Verlauf der Datenleitungen innerhalb des Powerline-Moduls 106 ist in Figur 2 illustriert. Die Kopplung der Datenübertragung erfolgt zwischen den Leitungen der Spannungsversorgung 101 und den Datenleitungen zu einer Ein-/Ausgabe-Schnittstelle 304 und dem Hardware-Verbindungselement 303 zum physikalischen Übertragungsmedium 204. Die Powerline-Signale, d.h. Datensignal der Versorgungsspannungüberlagert, werden über ein Powerline-Interface 302 eingekoppelt, in einem analogen Frontend umgewandelt (Analog-Digital-Wandlung) und von einer internen Recheneinheit 301 verarbeitet. Das Datensignal wird über eine Schnittstelle an ein, je nach physikalischem Übertragungsmedium, geeignetes Hardware-Verbindungselement 303 an die Leitung 310 zur Kommunikationsschnittstelle 110 weitergeleitet. Zudem wird das Datensignal an die Einrichtung zum Datenaustausch, Ein-/Ausgabe-Schnittstelle 304, zwischen der internen Recheneinheit 301 und der Leitung 311 zum Steuergerät 112 weitergeleitet.

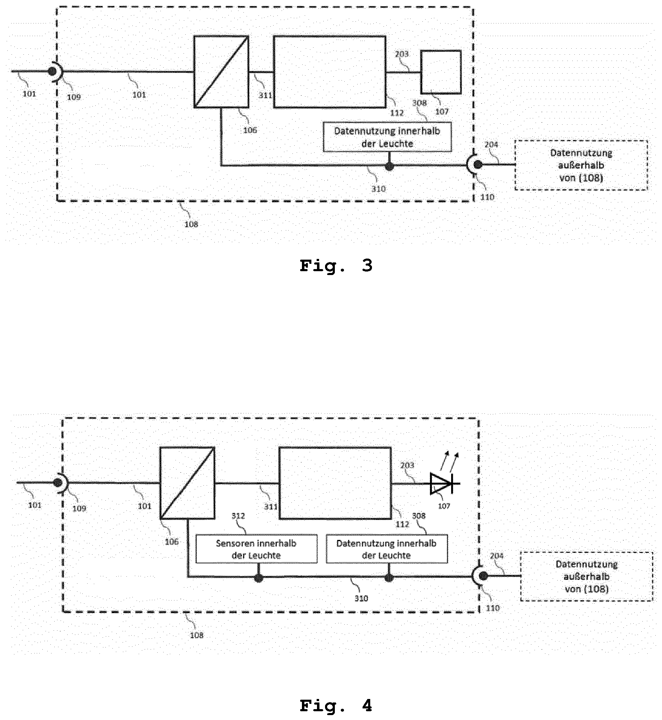

Figur 3 beschreibt eine weitere Ausführungsform der vorliegenden Erfindung, die eine zusätzliche Einrichtung 308 zur Datennutzung innerhalb der Netzwerkkomponente 108 vorsieht. Hierzu werden die ursprünglich Funktionen des Betriebsgeräts 107 erweitert, indem das Steuergerät 112 auch das Datensignal, welches zwischen Versorgungs- und Kommunikationsschnittstelle 110 übertragen wird, berücksichtigt, wenn das mindestens eine Betriebsgerät 107 der Netzwerkkomponente 108 angesteuert wird. Diese Ausführungsform ermöglicht beispielsweise dass das Betriebsgerät 107, zum Beispiel eine Lampe, nun nicht nur über einen Taster geschaltet oder geregelt werden kann, sondern auch ein Ansteuern des Betriebsgeräts 107 über das Datensignal erfolgen kann, beispielsweise über eine Smartphone Applikation.

Figur 4 beschreibt eine bevorzugte Ausführungsform der vorliegenden Erfindung, die, neben der Datennutzung innerhalb der Netzwerkkomponente, zusätzlich wenigstens einen Sensor 312 aufweist, der in der Netzwerkkomponente 108 angeschlossen ist. Die Position des Sensoranschlusses in der Netzwerkkomponente 108 ermöglicht es, dass die Sensorwerte in das Datensignal eingespeist werden, und somit innerhalb der Netzwerkkomponente 108 von dem Steuergerät 112 verarbeitet und interpretiert werden können. Zudem werden die Sensorwerte durch das Datensignal auch dem gesamten Netzwerk zur Verfügung gestellt. In einer erfindungsgemäßen Netzwerkkomponente 108 kann auch ein Interface vorgesehen sein, um zum späteren Zeitpunkt einen Sensor einzubauen. In der illustrierten Ausführungsform ist das Betriebsgerät 107 beispielhaft als LED ausgeführt. Ein mögliches Anwendungsbeispiel des Sensors 312 ist ein Bewegungssensor, um Personenverkehr zu erkennen. Durch die Sensorwerte könnte einerseits die Lichtintensität der LED 107 beeinflusst werden und zudem ein angeschlossenes externes Gerät, welches eine Netzwerkverbindung, beispielsweise zu einem Datenserver, benötigt, zum Beispiel eine Überwachungskamera, aus dem Ruhemodus aktiviert werden. Ein denkbares Szenario besteht in einem Beleuchtungssystem mit Überwachungskamera. Wenn keine Person erkannt wird, wird die Helligkeit der LED auf die eine Notbeleuchtung gedimmt und die Überwachungskamera zeichnet nur alle 2 Sekunden ein Bild auf. Wird eine Person erkannt, dimmt die LED voll auf und die Überwachungskamera nimmt alle 100 ms ein Bild auf und sendet diesen Datenstrom über die Netzwerkverbindung mit der Netzwerkkomponente an einen Server. In einer weiteren Ausführungsform kann an der Kommunikationsschnittstelle 110 eine weitere Leuchte angeschlossen sein. Beim Detektieren einer Person in der ersten Netzwerkkomponente 108 kann dieses Ereignis als Datensignal über die Kommunikationsschnittstelle 110 zur nächsten Leuchte weitergegeben werden, so dass z.B. in Laufrichtung der Person die nächstfolgende Leuchte ebenfalls eingeschaltet wird.

### BEZUGSZEICHENLISTE

- 101: elektrische Versorgungsleitung;
- 106: Powerline-Modul;
- 107: Betriebsgerät;
- 108: Netzwerkkomponente;
- 109: Versorgungsschnittstelle;
- 110: Kommunikationsschnittstelle;
- 112: Steuergerät;
- 203: Leitung;
- 204: physikalisches Übertragungsmedium;
- 301: interne Recheneinheit;
- 302: Powerline-Interface;
- 303: Hardware-Verbindungselement;
- 304: Ein-/Ausgabe-Schnittstelle;
- 308: Einrichtung;
- 310: Leitung;
- 311: Leitung;
- 312: Sensor

## Patentansprüche

1. Netzwerkkomponente (108) für ein Netz, welches eine Vielzahl von gleichartigen Netzwerkkomponenten (108) umfasst, und die Netzwerkkomponente (108) Teil einer Gebäudeinstallation, insbesondere einer Beleuchtungseinrichtung, ist,
wobei die Netzwerkkomponente (108) eine Versorgungsschnittstelle (109) für eine elektrische Versorgungsleitung (101), welche eine Spannungsversorgung für die Netzwerkkomponente (108) sowie ein Datensignal trägt,
sowie ein Powerline-Modul (106), ein Steuergerät (112), mindestens ein Betriebsgerät (107) der Gebäudeinstallation, und eine Kommunikationsschnittstelle (110) umfasst,
wobei das Powerline-Modul (106) eingerichtet ist, das über die Versorgungsleitung (101) übertragene Datensignal aus- und/oder einzukoppeln,
und das Steuergerät (112) mit dem mindestens einen Betriebsgerät (107) verbunden ist und dazu eingerichtet ist, das mindestens eine Betriebsgerät (107) anzusteuern, und das Powerline-Modul (106) mit der Kommunikationsschnittstelle (110) verbunden ist, um das Datensignal an die Kommunikationsschnittstelle (110) zu übertragen und/oder von dieser zu empfangen;
und die Kommunikationsschnittstelle (110) eingerichtet ist, einen Anschluss für ein physikalisches Übertragungsmedium (204) bereitzustellen,
**dadurch gekennzeichnet, dass** die Netzwerkkomponente (108) ferner wenigstens einen in der Netzwerkkomponente integrierten Sensor (312) enthält, der Umgebungs- oder Umweltzustände erfassen kann,
wobei der Sensor (312) in der Verbindung zwischen Powerline-Modul (106) und Kommunikationsschnittstelle (110) angeschlossen ist, und
das Steuergerät (112) dazu eingerichtet ist, die eingespeisten Sensorwerte zu verarbeiten, und zur Ansteuerung des Betriebsgeräts (107) zu nutzen.

2. Netzwerkkomponente nach Anspruch 1, wobei das Steuergerät (112) dazu eingerichtet ist, das mindestens eine Betriebsgerät (107) unter Nutzung des Datensignals anzusteuern.

3. Netzwerkkomponente nach einem der vorhergehenden Ansprüche, wobei der Sensor (312) eingerichtet ist, Ergebnisse von Sensormesswerten in das Datensignal einzuspeisen.

4. Netzwerkkomponente nach einem der vorhergehenden Ansprüche, wobei der Sensor (312) von dem Steuergerät (112) durch das Nutzen des Datensignals ansteuerbar ist.

5. Netzwerkkomponente nach einem der vorangegangenen Ansprüche, wobei das Steuergerät (112) eingerichtet ist, Parameter des mindestens einen Betriebsgeräts (107) auszuwerten, und die ausgewerteten Parameter in das Datensignal einzuspeisen.

6. Netzwerkkomponente nach einem der vorangegangenen Ansprüche, wobei das Powerline-Modul (106) eine interne Recheneinheit (301), ein Powerline-Interface (302), ein Hardware-Verbindungselement (303) und eine Ein- /Ausgabeschnittstelle (304) umfasst,
wobei die Art der Hardware des Hardware-Verbindungselements (303), welche das Powerline-Modul (106) mit der zur Kommunikationsschnittstelle (110) verbindet, höchstens der vierten Schicht des OSI Modells zugeordnet ist.

7. Netzwerkkomponente nach einem der vorangegangenen Ansprüche, wobei das physikalische Übertragungsmedium (204) die Netzzugangsschicht zur Datenübertragung und ein Protokoll nach IEEE Norm 802.X nutzt, insbesondere eine Ethernet-Verbindung nach IEEE Norm 802.3 oder eine drahtlose Netzwerkverbindung nach IEEE Norm 802.11.

8. Netzwerkkomponente nach Anspruch 7, wobei die Ethernet-Verbindung nach IEEE Norm 802.3 voll-duplex fähig ist.

9. Netzwerkkomponente nach einem der vorangegangenen Ansprüche, wobei das physikalische Übertragungsmedium (204) Lichtwellenleiter zur Datenübertragung nutzt.

10. Netzwerkkomponente nach einem der vorangegangenen Ansprüche, wobei das physikalische Übertragungsmedium (204) optische Drahtlosübertragung nutzt.

11. Netzwerkkomponente nach Anspruch 1 bis 7, wobei das physikalische Übertragungsmedium (204) eine Schnittstelle nach EIA-485 aufweist.

12. Netzwerk mit wenigstens einer Netzwerkkomponente (108) nach einem der vorhergehenden Ansprüche, wobei das Netzwerk mindestens eine weitere Netzwerkkomponente aufweist, welche über das physikalische Übertragungsmedium (204) mit der Kommunikationsschnittstelle (110) der Netzwerkkomponente (108) nach einem der vorherigen Ansprüche verbunden ist und die weitere Netzwerkkomponente das Datensignal über das physikalische Übertragungsmedium (204) empfängt.

13. Netzwerk nach Anspruch 12, wobei die weitere Netzwerkkomponente eingerichtet ist, das Datenübertragungssignal aufzuzeichnen und/oder zum Betreiben eines weiteren Betriebsgeräts der Gebäudeinstallation zu nutzen.

## Claims

1. Network component (108) for a network, which comprises a plurality of similar network components (108), and the network component (108) is part of a building installation, in particular a lighting device,
wherein the network component (108) comprises a supply interface (109) for an electrical supply line (101), which carries a voltage supply for the network component (108) and a data signal,
and a power line module (106), a control device (112), at least one operating device (107) of the building installation, and a communication interface (110), wherein the power line module (106) is configured to couple the data signal transmitted via the supply line (101) out and/or in,
and the control device (112) is connected to the at least one operating device (107) and is configured to control the at least one operating device (107),
and the power line module (106) is connected to the communication interface (110) in order to transmit the data signal to and/or receive the data signal from the communication interface (110);
and the communication interface (110) is configured to provide a connection for a physical transmission medium (204),
**characterised in that** the network component (108) further contains at least one sensor (312) integrated in the network component, which can detect surrounding or environmental conditions,
wherein the sensor (312) is connected in the connection between the power line module (106) and the communication interface (110), and
the control device (112) is configured to process the fed-in sensor values and to use them to control the operating device (107).

2. Network component according to claim 1, wherein the control device (112) is configured to control the at least one operating device (107) using the data signal.

3. Network component according to one of the preceding claims, wherein the sensor (312) is configured to feed results of sensor measurement values into the data signal.

4. Network component according to one of the preceding claims, wherein the sensor (312) can be controlled by the control device (112) by using the data signal.

5. Network component according to one of the preceding claims, wherein the control device (112) is configured to evaluate parameters of the at least one operating device (107) and to feed the evaluated parameters into the data signal.

6. Network component according to one of the preceding claims, wherein the power line module (106) comprises an internal computing unit (301), a power line interface (302), a hardware connection element (303) and an input/output interface (304),
wherein the type of hardware of the hardware connection element (303) which connects the power line module (106) to the communication interface (110) is assigned at most to the fourth layer of the OSI model.

7. Network component according to one of the preceding claims, wherein the physical transmission medium (204) uses the network access layer for data transmission and a protocol according to IEEE Standard 802.X, in particular an Ethernet connection according to IEEE Standard 802.3 or a wireless network connection according to IEEE Standard 802.11.

8. Network component according to claim 7, wherein the Ethernet connection according to IEEE Standard 802.3 is capable of full duplex.

9. Network component according to one of the preceding claims, wherein the physical transmission medium (204) uses optical waveguides for data transmission.

10. Network component according to one of the preceding claims, wherein the physical transmission medium (204) uses optical wireless transmission.

11. Network component according to claim 1 to 7, wherein the physical transmission medium (204) comprises an interface according to EIA-485.

12. Network comprising at least one network component (108) according to one of the preceding claims, wherein the network comprises at least one further network component which is connected via the physical transmission medium (204) to the communication interface (110) of the network component (108) according to one of the preceding claims and the further network component receives the data signal via the physical transmission medium (204).

13. Network according to claim 12, wherein the further network component is configured to record the data transmission signal and/or to use it to operate a further operating device of the building installation.

## Revendications

1. Composant de réseau (108) pour un réseau qui comprend une pluralité de composants réseau (108) de même type, et le composant de réseau (108) fait partie d'une installation de bâtiment, plus particulièrement d'un dispositif d'éclairage,
dans lequel le composant de réseau (108) supporte une interface d'alimentation (109) pour une ligne d'alimentation (101), qui supporte une alimentation en tension pour le composant de réseau (108) ainsi qu'un signal de données,
ainsi qu'un module Powerline (106), un appareil de commande (112), au moins un appareil d'actionnement (107) de l'installation de bâtiment, et une interface de communication (110),
dans lequel le module Powerline (106) est conçu pour le découplage et/ou le couplage du signal de données transmis par l'intermédiaire de la ligne d'alimentation (101),
et l'appareil de commande (112) est relié avec l'au moins un appareil d'actionnement (107) et est conçu pour contrôler l'au moins un appareil d'actionnement (107),
et le module Powerline (106) est relié avec l'interface de communication (110) afin de transmettre le signal de données à l'interface de communication (110) et/ou de le recevoir en provenance de celle-ci ;
et l'interface de communication (110) est conçue pour mettre à disposition un raccordement pour un moyen de transmission physique (204),
**caractérisé en ce que** le composant de réseau (108) contient en outre au moins un capteur (312) intégré dans le composant de réseau, qui peut mesurer des états du milieu ou de l'environnement,
dans lequel le capteur (312) est raccordé dans la liaison entre le module Powerline (106) et l'interface de communication (110) et
l'appareil de commande (112) est conçu pour traiter les valeurs de capteur introduites et pour les utiliser pour le contrôle de l'appareil d'actionnement (107).

2. Composant de réseau selon la revendication 1, dans lequel l'appareil de commande (112) est conçu pour contrôler l'au moins un appareil d'actionnement (107) en utilisant le signal de données.

3. Composant de réseau selon l'une des revendications précédentes, dans lequel le capteur (312) est conçu pour introduire les résultats des valeurs de mesure du capteur dans le signal de données.

4. Composant de réseau selon l'une des revendications précédentes, dans lequel le capteur (312) peut être contrôlé par l'appareil de commande (112) en utilisant le signal de données.

5. Composant de réseau selon l'une des revendications précédentes, dans lequel l'appareil de commande (112) est conçu pour analyser des paramètres de l'au moins un appareil d'actionnement (107) et pour introduire les paramètres analysés dans le signal de données.

6. Composant de réseau selon l'une des revendications précédentes, dans lequel le module Powerline (106) comprend une unité de calcul interne (301), une interface Powerline (302), un élément de raccordement hardware (303) et une interface d'entrée/sortie (304),
dans lequel le type de hardware de l'élément de raccordement hardware (303) qui relie le module Powerline (106) avec l'interface de communication (110) correspond au plus à la quatrième couche du modèle OSI.

7. Composant de réseau selon l'une des revendications précédentes, dans lequel le moyen de transmission physique (204) utilise la couche d'accès réseau pour la transmission des données et un protocole selon IEEE Norme 802.X, plus particulièrement une liaison Ethernet selon IEEE Norme 802.3 ou une liaison réseau sans fil selon IEE Norme 802.11.

8. Composant de réseau selon la revendication 7, dans lequel la liaison Ethernet selon IEEE Norme 802.3 supporte le full-duplex.

9. Composant de réseau selon l'une des revendications précédentes, dans lequel le moyen de transmission physique (204) utilise des fibres optiques pour la transmission des données.

10. Composant de réseau selon l'une des revendications précédentes, dans lequel le moyen de transmission physique (204) utilise une transmission sans fil optique.

11. Composant de réseau selon l'une des revendications 1 à 7, dans lequel le moyen de transmission physique (204) comprend une interface selon EIA-485.

12. Réseau avec au moins un composant de réseau (108) selon l'une des revendications précédentes, dans lequel le réseau comprend au moins un autre composant de réseau qui est relié, par l'intermédiaire du moyen de transmission physique (204), avec l'interface de communication (110) du composant de réseau (108) selon l'une des revendications précédentes et l'autre composant de réseau reçoit le signal de données par l'intermédiaire du moyen de transmission physique (204).

13. Réseau selon la revendication 12, dans lequel l'autre composant de réseau est conçu pour enregistrer le signal de transmission de données et/ou pour le contrôle d'un autre appareil d'actionnement de l'installation de bâtiment.
